# EUROPEAN PATENT APPLICATION

(11) **EP 4 513 654 A1**
(43) Date of publication of application: **26.02.2025**
(21) Application number: 24775056.5
(22) Date of filing: 25.01.2024
(51) Int. Cl.: H01M 50/446, H01M 50/449, H01M 50/411, H01M 50/42, H01M 10/052

(54) **SEPARATOR FOR ELECTROCHEMICAL DEVICE AND ELECTROCHEMICAL DEVICE COMPRISING SAME**

(30) Priority: 17.03.2023 KR 20230035101; 17.03.2023 KR 20230035102
(71) Applicant: LG Energy Solution, Ltd., Seoul 07335 (KR)
(72) Inventor: SUNG, In Hyouk, Daejeon 34122 (KR); SUNG, Dong Wook, Daejeon 34122 (KR); KA, Kyung Ryun, Daejeon 34122 (KR); KIM, Ji Hyeon, Daejeon 34122 (KR); KIM, Ji Yeon, Daejeon 34122 (KR)
(74) Representative: Hoffmann Eitle
(86) International application number: PCT/KR2024/001164
(87) International publication number: WO 2024/196008

(57) **Abstract**

The present invention relates to a separator for an electrochemical device includes a porous polymer substrate, and a porous coating layer formed on at least one surface of the porous polymer substrate, wherein the porous coating layer includes an acrylic polymer binder, a copolymer binder, and inorganic particles, and the copolymer binder has a weight average molecular weight of 40,000 to 80,000, and the copolymer binder and the inorganic particles are included in a weight ratio of 1:93 to 1:20.

## Description

### Technical Field

This application is based on and claims priority from Korean Patent Application Nos. 10-2023-0035101 and 10-2023-0035102, both filed on March 17, 2023, with the Korean Intellectual Property Office, the disclosures of which are incorporated herein in their entireties by reference.

The present disclosure relates to a separator for an electrochemical device and an electrochemical device including the same.

### Background Art

Electrochemical devices convert chemical energy into electrical energy using electrochemical reactions, and lithium secondary batteries have been widely used in recent years due to their high energy density and voltage, long cycle life, and versatility in a variety of applications.

The lithium secondary battery may include an electrode assembly manufactured with a positive electrode, a negative electrode, and a separator disposed between the positive electrode and the negative electrode, and the electrode assembly is accommodated in a case with an electrolyte. The separator may include a porous coating layer containing a polymer binder and inorganic particles on at least one side of a porous substrate. The inorganic particles may be connected to other inorganic particles by the polymer binder to form an interstitial volume, and the lithium ions may migrate through the interstitial volume. In addition to immobilizing the inorganic particles, the polymer binder may also provide adhesion to the porous coating layer, and the porous coating layer may be adhered to the porous substrate and the electrode, respectively.

Meanwhile, such a separator needs to maintain stability at high temperatures and wet conditions that may occur during operation of the lithium secondary battery.

### DISCLOSURE

### Technical Problem

The present disclosure provides a separator for an electrochemical device having a reduced dimensional change rate in a high temperature wet state, a manufacturing method thereof, and an electrochemical device including the separator.

### Technical Solution

According to an aspect of the present disclosure, a separator for an electrochemical device includes a porous polymer substrate; and a porous coating layer formed on at least one surface of the porous polymer substrate. The porous coating layer includes an acrylic polymer binder, a copolymer binder, and inorganic particles, the copolymer binder has a weight average molecular weight of about 40,000 to 80,000, and the copolymer binder and the inorganic particles are included in a weight ratio of about 1:93 to 1:20.

The acrylic polymer binder may include a repeating unit including one or more monomers selected from the group consisting of (meth)acrylic acid, (meth)acrylate, propyl acrylate, isopropyl acrylate, n-butyl acrylate, isobutyl acrylate, n-amyl acrylate, isoamyl acrylate, n-ethylhexyl acrylate, 2-ethylhexyl acrylate, 2-hydroxyethyl acrylate, methyl methacrylate, ethyl methacrylate, propyl methacrylate, isopropyl methacrylate, n-butyl methacrylate, isobutyl methacrylate, n-amyl methacrylate, isoamyl methacrylate, n-hexyl methacrylate, n-ethylhexyl methacrylate, 2-ethylhexyl methacrylate, hydroxyethyl methacrylate, (meth)acrylonitrile butyl (meth)acrylate, 2-ethylhexyl (meth)acrylate, ethyl (meth)acrylate, methyl (meth)acrylate, n-propyl (meth)acrylate, isopropyl (meth)acrylate, t-butyl (meth)acrylate, pentyl (meth)acrylate, n-oxyl (meth)acrylate, isooctyl (meth)acrylate, isononyl (meth)acrylate, lauryl (meth)acrylate, and tetradecyl (meth)acrylate.

The copolymer binder may be obtained by copolymerizing two or more selected from the group consisting of polyacrylic acid, polyacrylamide, and polyvinyl alcohol.

The copolymer binder may be obtained by copolymerizing polyacrylic acid and polyacrylamide in a ratio of about 8:2 to 5:5.

The acrylic polymer binder may be in a form of particles having an average particle diameter (D50) of about 100 nm to 500 nm, and the copolymer binder may be non-particle-shaped.

The porous coating layer may include approximately 90% by weight to 95% by weight of the inorganic particles based on the total weight of the porous coating layer.

A content of the acrylic polymer binder may be greater than a content of the copolymer binder on a weight basis of the porous coating layer.

The acrylic polymer binder and the copolymer binder may be included in a weight ratio of about 5:1 to 1.5:1.

According to another aspect of the present disclosure, an electrochemical device includes a positive electrode, a negative electrode, and a separator disposed between the positive electrode and the negative electrode, in which the separator is a separator for an electrochemical device that is different from the one aspect described above.

The electrochemical device may be a lithium secondary battery.

The electrochemical device may further include an electrolyte containing a solvent in which ethylene carbonate (EC) and ethyl methyl carbonate (EMC) are mixed in a weight ratio of about 3:7.

According to another aspect of the present disclosure, a method for manufacturing a separator for an electrochemical device includes forming a porous polymer substrate and a porous coating layer formed on at least one surface of the porous polymer substrate, in which the porous coating layer includes an acrylic polymer binder, a copolymer binder, and inorganic particles, the copolymer binder has a weight average molecular weight of about 40,000 to 80,000, and the copolymer binder and the inorganic particles are included in a weight ratio of about 1:93 to 1:20.

The acrylic polymer binder may include a repeating unit including one or more monomers selected from the group consisting of (meth)acrylic acid, (meth)acrylate, propyl acrylate, isopropyl acrylate, n-butyl acrylate, isobutyl acrylate, n-amyl acrylate, isoamyl acrylate, n-ethylhexyl acrylate, 2-ethylhexyl acrylate, 2-hydroxyethyl acrylate, methyl methacrylate, ethyl methacrylate, propyl methacrylate, isopropyl methacrylate, n-butyl methacrylate, isobutyl methacrylate, n-amyl methacrylate, isoamyl methacrylate, n-hexyl methacrylate, n-ethylhexyl methacrylate, 2-ethylhexyl methacrylate, hydroxyethyl methacrylate, (meth)acrylonitrile butyl (meth)acrylate, 2-ethylhexyl (meth)acrylate, ethyl (meth)acrylate, methyl (meth)acrylate, n-propyl (meth)acrylate, isopropyl (meth)acrylate, t-butyl (meth)acrylate, pentyl (meth)acrylate, n-oxyl (meth)acrylate, isooctyl (meth)acrylate, isononyl (meth)acrylate, lauryl (meth)acrylate, and tetradecyl (meth)acrylate.

The copolymer binder may be obtained by copolymerizing two or more selected from the group consisting of polyacrylic acid, polyacrylamide, and polyvinyl alcohol.

The copolymer binder may be obtained by copolymerizing polyacrylic acid and polyacrylamide in a ratio of about 8:2 to 5:5.

The acrylic polymer binder may be in a form of particles having an average particle diameter (D50) of about 100 nm to 500 nm, and the copolymer binder may be non-particle-shaped.

The porous coating layer may include approximately 90% by weight to 95% by weight of the inorganic particles based on the total weight of the porous coating layer.

A content of the acrylic polymer binder may be greater than a content of the copolymer binder on a weight basis of the porous coating layer.

The acrylic polymer binder and the copolymer binder may be included in a weight ratio of about 5:1 to 1.5:1.

According to yet another aspect of the present disclosure, there is provided a method of manufacturing an electrochemical device including a positive electrode, a negative electrode, and a separator disposed between the positive electrode and the negative electrode, in which the separator is the separator for an electrochemical device.

The electrochemical device may further include an electrolyte containing a solvent in which ethylene carbonate (EC) and ethyl methyl carbonate (EMC) are mixed in a weight ratio of about 3:7.

### Advantageous Effects

The separator for an electrochemical device according to the present disclosure may provide improved dimensional stability in a dry state and a wet state of being impregnated with an electrolyte solution. For example, the separators may exhibit a dry state heat shrinkage of about 5% or less at high temperature conditions of 200 °C or more, and a wet state heat shrinkage rate of about 5% or less at high temperature conditions of 130 °C or more, thereby preventing exposure of electrodes due to heat shrinkage of the separators.

### Description of Embodiments

Hereinafter, with reference to the accompanying drawings, embodiments of the present disclosure will be described in detail to facilitate the practicing by one of ordinary skill in the art to which the present disclosure belongs. The present disclosure may be implemented in various different forms, and is not limited or restricted by the embodiments described herein below.

As used herein, the term "including" is used to list materials, compositions, devices, and methods useful in the present disclosure and is not limited to the listed examples.

As used herein, the words "about," "approximately," and "substantially" are used to mean a range or approximation of a numerical value or degree, taking into account inherent manufacturing and material tolerances, and are used to prevent infringers from taking unfair advantage of the disclosure where precise or absolute numbers are provided to aid in the understanding of the disclosure.

As used herein, the term "electrochemical device" may refer to a primary battery, a secondary battery, or a supercapacitor.

As used herein, the word "wet" may refer to a state where the separator is impregnated with at least a portion of the electrolyte, and the word "dry" may refer to a dry state where the separator is not impregnated with the electrolyte.

As used herein, the term "durability" may mean the ability of a binder to exhibit adhesion or mechanical strength as an inherent property without swelling or deformation upon contact with an electrolyte.

The separator used in a lithium secondary battery may prevent heat shrinkage of the porous polymer substrate by applying a porous coating layer containing a polymer binder and inorganic particles to at least one surface of the porous substrate, and the separator including the porous coating layer generally exhibits good dimensional stability in the dry state where the electrolyte is not applied. However, in the wet state where the separator is impregnated with an electrolyte, the adhesion of the polymer binder may be degraded as the polymer binder is swelled by the electrolyte, or as the separator is exposed to temperatures above, for example, about 130 °C, according to the operation of the lithium secondary battery including the separator. The separator tends to shrink significantly under these high-temperature wet conditions, as the adhesion of the porous coating layer decreases. For example, cylindrical batteries in which the electrode assembly is wound and inserted into the case with tension applied to the electrode assembly, require less adhesion between the electrodes and separator than pouch-type batteries, and therefore, contain less polymer binder, resulting in further decreased dimensional stability in the wet state.

According to an embodiment, the present disclosure provides a separator that exhibits good dimensional stability under high temperature and wet conditions while maintaining a relatively low content of polymer binder in the porous coating layer.

A separator for an electrochemical device according to an embodiment of the present disclosure includes a porous polymer substrate and a porous coating layer formed on at least one surface of the porous polymer substrate. The porous coating layer includes an acrylic polymer binder, a copolymer binder, and inorganic particles, the copolymer binder has a weight average molecular weight of about 40,000 to 80,000, and the copolymer binder and the inorganic particles are included in a weight ratio of about 1:93 to 1:20.

The porous polymer substrate may be a porous membrane having a plurality of pores, which electrically insulates the positive electrode and the negative electrode of the electrochemical device to prevent short circuits. For example, when the electrochemical device is a lithium secondary battery, the separator made of the porous polymer substrate may be an ionically conductive barrier that blocks electrical contact between a positive electrode and a negative electrode while allowing lithium ions to pass through. At least a portion of the pores may form a three-dimensional network communicating with the surface and interior of the porous polymer substrate, and fluid may pass through the porous polymer substrate through the pores.

The porous polymer substrate may be a material that is physically and chemically stable to an electrolyte that is an organic solvent. Examples of the porous polymer substrate include resins, for example, polyolefins such as polyethylene, polypropylene, and polybutylene, polyvinyl chloride, polyethylene terephthalate, polycycloolefins, polyethersulfone, polyamides, polyimides, polyimidamides, nylon, polytetrafluoroethylene, and copolymers or mixtures thereof, but not limited thereto. For example, a polyolefin-based resin may be used as the porous polymer substrate. The polyolefin-based resins are suitable for manufacturing electrochemical devices with higher energy density because they may be processed to relatively small thicknesses and are relatively easy to apply coating slurries.

The porous polymer substrate may have a monolayer or multilayer structure. The porous polymer substrate may include two or more polymer resin layers having different melting points (Tm) to provide shutdown capability during high temperature runaway of the battery. For example, the porous polymer substrate may include a polypropylene layer having a relatively high melting point and a polyethylene layer having a relatively low melting point. For example, the porous polymer substrate may have a three-layer structure in which polypropylene, polyethylene, and polypropylene are laminated in this order. As the temperature of the battery rises above a predetermined temperature, the polyethylene layer melts and shuts down the pores, thereby preventing thermal runaway of the battery.

The thickness of the porous polymer substrate may be about 1 µm or more and 100 µm or less. For example, the thickness of the porous polymer substrate may be about 10 µm or more and 90 µm or less, 20 µm or more and 80 µm or less, 30 µm or more and 70 µm or less, or 40 µm or more and 60 µm or less. For example, the thickness of the porous polymer substrate may be about 1 µm or more and 30 µm or less. Alternatively, the thickness of the porous polymer substrate may be about 5 µm or more and 15 µm or less, or about 8 µm or more and 13 µm or less. When the thickness of the porous polymer substrate is adjusted in the above-mentioned range, the separator is, for example, prepared using the porous polymer substrate, as an electrical insulator for the positive electrode and the negative electrode of the electrochemical device while minimizing the volume of the electrochemical element, thereby increasing the amount of an active material contained in the electrochemical device.

The porous polymer substrate may contain pores having an average diameter of about 0.01 µm or more and 1 µm or less. For example, the diameter of the pores contained in the porous polymer substrate may be about 0.01 µm or more and 0.09 µm or less, 0.02 µm or more and 0.08 µm or less, 0.03 µm or more and 0.07 µm or less, or 0.04 µm or more and 0.06 µm or less. Alternatively, the size of the pores may be about 0.02 µm or more and 0.06 µm or less. When the pore size of the porous polymer substrate is adjusted within the above-mentioned range, the air permeability and ionic conductivity of the entire prepared separator may be controlled.

According to an embodiment, the porous polymer substrate may have an air permeability of about 10 s/100 cc or more and 100 s/100 cc or less. For example, the porous polymer substrate may have an air permeability of about 10 s/100 cc or more and 90 s/100 cc or less, 20 s/100 cc or more and 80 s/100 cc or less, 30 s/100 cc or more and 70 s/100 cc or less, or 40 s/100 cc or more and 60 s/100 cc or less. Alternatively, the air permeability of the porous polymer substrate may be about 50 s/100 cc or more and 70 s/100 cc or less. When the air permeability of the porous polymer substrate is within the above-mentioned range, the air permeability of the prepared separator may be provided in a range suitable for securing the output and cycle characteristics of the electrochemical device.

Meanwhile, the air permeability (s/100 cc) means a time (in seconds) it takes for 100 cc of air to pass through a predetermined area of a porous polymer substrate or a separator under constant pressure. The air permeability may be measured using a Gurley densometer in accordance with ASTM D 726-58, ASTM D726-94, or JIS-P8117. For example, a 4110N instrument from Gurley may be used to measure the time for 100 cc of air to pass through a sample of 1 square inch (or 6.54 cm²) under a pressure of 0.304 kPa of air or 1.215 kN/m² of water. For example, the ASAHI SEIKO EG01-55-1MR instrument may be used to measure the time for 100 cc of air to pass through a sample of 1 square inch under a constant pressure of 4.8 inches of water at room temperature.

The porous polymer substrate may have a porosity of about 10 vol% or more and 60 vol% or less. For example, the porosity of the porous polymer substrate may be about 15 vol% or more and 55 vol% or less, 20 vol% or more and 50 vol% or less, 25 vol% more and 45 vol% or less, or 30 vol% or more and 40 vol% or less. Alternatively, the porosity of the porous polymer substrate may be about 30 vol% or more and 50 vol% or less. When the porosity of the porous polymer substrate is within the above-mentioned range, the ionic conductivity of the prepared separator may be provided in a range suitable for securing the output and cycle characteristics of the electrochemical device.

The porosity refers to a ratio of a volume of pores to the total volume of the porous polymer substrate. The porosity may be measured by a method known in the art. For example, the porosity may be measured by Brunauer Emmett Teller (BET) measurement using adsorption of nitrogen gas, capillary flow porometer, or water or mercury infiltration method.

The porous coating layer is formed on at least one surface of the porous polymer substrate, and includes an acrylic polymer binder, a copolymer binder, and inorganic particles.

The porous coating layer may be formed by coating at least one surface of the porous polymer substrate with a coating slurry containing an acrylic polymer binder, a copolymer binder, inorganic particles, and a dispersion medium. For example, the separator may be prepared by applying the coating slurry on at least one surface of the porous polymer substrate, followed by drying to remove the dispersion medium. Since the inorganic particles included in the porous coating layer are connected by the acrylic polymer binder and the copolymer binder to form an interstitial volume, the porous coating layer is adhered to the porous polymer substrate while allowing lithium ions to pass through the interstitial volume, thereby preventing heat shrinkage of the porous polymer substrate.

The coating slurry may contain a dispersion medium to dissolve or disperse at least a portion of the acrylic polymer binder or the copolymer binder, and disperse the inorganic particles. The coating slurry may be used in which the polymer binder and inorganic particles are uniformly dispersed by controlling the type and content of the dispersion medium. Examples of the dispersion medium include water, ethanol, acetone, isopropyl alcohol (IPA), dimethylacetamide (DMAc), dimethylformamide (DMF), N-methyl-2-pyrrolidone (NMP), acetonitrile (acetonitrile), and combinations thereof. According to an embodiment, the dispersion medium may be water. The above-described type of dispersion medium may be used to form the porous coating layer in which inorganic particles are uniformly dispersed.

The coating slurry may have a viscosity of about 100 cps or more and 1,000 cps or less. For example, the viscosity of the coating slurry may be about 200 cps or more and 900 cps or less, 300 cps or more and 800 cps or less, 400 cps or more and 700 cps or less, or 500 cps or more and 600 cps or less. Alternatively, the viscosity of the coating slurry may be about 300 cps or more and 800 cps or less.

The coating slurry may further include additives such as dispersants, surfactants, anti-foaming agents, flame retardants, and wetting agents to improve dispersibility and flame retardancy and improve the uniformity of the formed porous coating layer. Examples of the dispersant include one or more selected from the group consisting of oil-soluble polyamines, oil-soluble amine compounds, fatty acids, fatty alcohols, sorbitan fatty acid esters, tannic acid, pyrogallic acid, and polyacrylic acid. By using the above-described type of dispersant, it is possible to improve the stability of the coating slurry, and secure the uniformity of the porous coating layer formed from the coating slurry.

The additive may be contained in an amount of about 0% by weight or more and 5% by weight or less based on the total weight of the coating slurry. For example, the content of the additive may be about 0.01% by weight or more and 4% by weight or less, 0.1% by weight or more and 3% by weight or less, or 1% by weight or more and 2% by weight or less. Alternatively, the content of the additive may be about 3% by weight or more and 5% by weight or less. When the content of the additive is adjusted within the above-mentioned range, uniform dispersion and stability of the inorganic particles contained in the coating slurry may be achieved.

The dispersion medium contained in the coating slurry may be removed by drying or heating after the formation of the porous coating layer. For example, the porous coating layer may contain about 5 ppm or less of the dispersion medium. According to an embodiment, the porous coating layer may be composed of an acrylic polymer binder, a copolymer binder, and inorganic particles. In the process of removing the dispersion medium, a plurality of pores may be formed on the surface and inside the porous coating layer. The pores may include interstitial volumes formed between the inorganic particles, and may have a structure in which a three-dimensional network is formed to allow fluid to pass therethrough.

The thickness of the porous coating layer may be about 1 µm or more and 15 µm or less. For example, the thickness of the porous coating layer may be about 2 µm or more and 14 µm or less, 3 µm or more and 13 µm or less, 4 µm or more and 12 µm or less, 5 µm or more and 11 µm or less, 6 µm or more and 10 µm or less, or 7 µm or more and 9 µm or less. Alternatively, the thickness of the porous coating layer may be about 1 µm or more and 5 µm or less. When the thickness of the porous coating layer is adjusted within the above-mentioned range, it is possible to minimize shrinkage of the porous polymer substrate and achieve stable adhesion to the porous polymer substrate.

The acrylic polymer binder may bind the inorganic particles included in the porous coating layer and provide adhesion to the porous coating layer. For example, the acrylic polymer binder may include a repeating unit including one or more monomers selected from the group consisting of (meth)acrylic acid, (meth)acrylate, propyl acrylate, isopropyl acrylate, n-butyl acrylate, isobutyl acrylate, n-amyl acrylate, isoamyl acrylate, n-ethylhexyl acrylate, 2-ethylhexyl acrylate, 2-hydroxyethyl acrylate, methyl methacrylate, ethyl methacrylate, propyl methacrylate, isopropyl methacrylate, n-butyl methacrylate, isobutyl methacrylate, n-amyl methacrylate, isoamyl methacrylate, n-hexyl methacrylate, n-ethylhexyl methacrylate, 2-ethylhexyl methacrylate, hydroxyethyl methacrylate, (meth)acrylonitrile butyl (meth)acrylate, 2-ethylhexyl (meth)acrylate, ethyl (meth)acrylate, methyl (meth)acrylate, n-propyl (meth)acrylate, isopropyl (meth)acrylate, t-butyl (meth)acrylate, pentyl (meth)acrylate, n-oxyl (meth)acrylate, isooctyl (meth)acrylate, isononyl (meth)acrylate, lauryl (meth)acrylate, and tetradecyl (meth)acrylate.

For example, the acrylic polymer binder may include one or more selected from the group consisting of polyacrylic acid, methyl acrylate, ethyl acrylate, isopropyl acrylate, n-butyl acrylate, isobutyl acrylate, ethylhexyl acrylate, methyl methacrylate, styrene-butadiene rubber, nitrile-butadiene rubber, acrylonitrile-butadiene rubber, and acrylonitrile-butadiene-styrene rubber.

The acrylic polymer binder may be in a form of particles. For example, the acrylic polymer binder may have particles of a spherical or oval shape, but is not limited thereto. The acrylic polymer binder may have an average particle diameter (D50) of about 100 nm or more and 500 nm or less. For example, the acrylic polymer binder may have an average particle diameter (D50) of about 150 nm or more and 450 nm or less, 200 nm or more and 400 nm or less, or 250 nm or more and 350 nm or less. Alternatively, the acrylic polymer binder may have an average particle diameter (D50) of about 250 nm or more and 400 nm or less. When the particle size of the acrylic polymer binder particles is adjusted within the above-mentioned range, the migration path of lithium ions and the adhesion of the porous coating layer to the porous polymer substrate may be secured at the same time.

The acrylic polymer binder may contribute to exhibiting dry adhesion, which is the adhesion of the porous coating layer in a dry state, and the copolymer binder may contribute to exhibiting wet adhesion, which is the adhesion of the porous coating layer in a wet state. The copolymer binder may be physically or chemically stable in an electrolyte compared to the acrylic-based polymer binder, and may not decrease in adhesion even in a wet state, so that the adhesion of the porous coating layer to the porous polymer substrate is maintained in a wet state, thereby reducing the heat shrinkage of the porous polymer substrate.

The copolymer binder may be obtained by copolymerizing two or more selected from the group consisting of polyacrylic acid (PAA), polyacrylamide (PAM), and polyvinyl alcohol (PVA). For example, the copolymer binder may be obtained by randomly copolymerizing two or more selected from the group consisting of polyacrylic acid, polyacrylamide, and polyvinyl alcohol.

According to an embodiment, the copolymer binder may be a copolymer of polyacrylic acid and polyacrylamide. In the copolymer binder, the polyacrylic acid may form bonds between the inorganic particles while exhibiting durability against the electrolyte. The polyacrylamide exhibits a higher modulus value than the polyacrylic acid, which further improves the durability of the copolymer binder against the electrolyte, thereby maintaining the shape of the copolymer binder even in the electrolyte.

In the case where the copolymer binder is a copolymer of polyacrylic acid and polyacrylamide, the copolymer binder may be obtained by copolymerizing polyacrylic acid and polyacrylamide in a ratio of about 8:2 to 5:5. For example, the copolymer binder may be obtained by copolymerizing polyacrylic acid and polyacrylamide in a ratio of about 8:2, 7:3, 6:4, or 5:5. Alternatively, the copolymer binder may be obtained by copolymerizing polyacrylic acid and polyacrylamide in a ratio of about 7:3 to 5:5. By copolymerizing polyacrylic acid and polyacrylamide in the above-mentioned ratio, it is possible to secure interstitial volume through binding of the inorganic particles included in the porous coating layer and ensure durability against electrolyte.

Meanwhile, the copolymer binder may be in a non-particle shape. The non-particle shape may encompass an atypical shape other than a spherical or oval shape. The non-particle-shaped copolymer binder forms bonds between the inorganic particles and between the inorganic particles and the acrylic polymer particles, thereby providing adhesion to the porous coating layer.

Further, the weight average molecular weight (Mw) of the copolymer binder may be approximately 40,000 or more and 80,000 or less. For example, the weight average molecular weight of the copolymer binder may be about 45,000 or more and 75,000 or less, 50,000 or more and 70,000 or less, or 55,000 or more and 65,000 or less. Alternatively, the weight average molecular weight of the copolymer binder may be about 60,000 or more and 70,000 or less. When the weight average molecular weight of the copolymer binder is adjusted in the above-mentioned range so that the viscosity of the coating slurry does not exceed 1000 cps, the structural modification of the copolymer binder by the electrolyte may be prevented, thereby reducing the wet state heat shrinkage rate of the separator.

The weight average molecular weight of the copolymer binder may be measured by gel permeation chromatography (GPC) (PL GPC220, Agilent Technologies). For example, the weight average molecular weight may be determined by using trichlorobenzene (TCB) as a solvent in a PL Olexis (Polymer Laboratories) column (column temperature: 160 °C), and using an Agilent High Temperature RI detector under the conditions of sample concentration of 1.0 mg/mL, flow rate of 1.0 mL/min, and injection volume of 200 µl (corrected using a cubic function, reference: Polystyrene).

The copolymer binder and the inorganic particles may be included in a weight ratio of about 1:93 to 1:20. For example, the weight ratio of the copolymer binder and the inorganic particles may be about 1:93, 1:92, 1:91, 1:90, 1:85, 1:80, 1:75, 1:70, 1:65, 1:60, 1:55, 1:50, 1:45, 1:40, 1:35, 1:30, 1:25, or 1:20. Alternatively, the weight ratio of the copolymer binder and the inorganic particles may be about 1:93 to 1:46. As a separator suitable for cylindrical batteries in the above-mentioned range, it is possible to manufacture a separator with reduced heat shrinkage by maintaining adhesion in a wet state.

A content of the acrylic polymer binder may be greater than a content of the copolymer binder on a weight basis of the porous coating layer. The acrylic polymer binder and the copolymer binder may be included in a weight ratio of about 5:1 to 1.5:1. For example, the weight ratio of the acrylic polymer binder and the copolymer binder may be about 5:1, 4.5:1, 4:1, 3.5:1, 3:1, 2.5:1, 2:1, or 1.5:1. When the contents of binders are adjusted within the above-mentioned range, it is possible to manufacture a separator suitable for cylindrical batteries having reduced dry and wet state heat shrinkage rates.

The inorganic particles may be electrochemically stable. The inorganic particles are not particularly limited as long as oxidation and/or reduction reactions do not occur in the operating voltage range of the electrochemical device (*e.g.,* 0 to 5 V based on Li/Li⁺). For example, the use of inorganic particles having a high permittivity may contribute to an increase in the dissociation of electrolyte salts, such as lithium salts, in the liquid electrolyte, thereby improving the ionic conductivity of the electrolyte. For the reasons described above, the inorganic particles may include high-permittivity inorganic particles having a dielectric constant of about 5 or more, for example, about 10 or more. Non-limiting examples of inorganic particles having a dielectric constant of about 5 or more include BaTiO₃, Pb(Zr,Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, SiO₂, Y₂O₃, Al₂O₃, Al(OH)₃, SiC, AlOOH, TiO₂, and mixtures thereof.

Further, inorganic particles having a lithium ion transfer capacity, that is, inorganic particles that contain the element lithium but do not store lithium and have an ability to transfer lithium ions, may be used as the inorganic particles. Non-limiting examples of the inorganic particles having a lithium ion transfer capability include lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y} series glasses (0<x<4, 0<y<13) such as 14Li₂O-9Al₂O₃-38TiO₂-39P2O₅, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5) such as Li_{3.25}Ge_{0.25}P_{0.75}S₄, lithium nitride (LiₓN_{y}, 0<x<4, 0<y<2) such as Li₃N, SiS₂ series glasses (LiₓSi_{y}S_{z}, 0<x<3, 0<y<2, 0<z<4) such as Li₃PO₄-Li₂S-SiS₂, and P₂S₅ series glasses (LiₓP_{y}S_{z}, 0<x<3, 0<y<3, 0<z<7) such as LiI-Li₂S-P₂S₅, or a mixture of two or more thereof.

Further, inorganic particles having flame retardancy may be used to impart flame retardant properties to the separator, or to prevent the temperature inside the electrochemical element from rising rapidly. Non-limiting examples of the inorganic particles having flame retardancy include Sb₂O₃, Sb₂O₄, Sb₂O₅, SrTiO₃, SnO₂, CeO₂, MgO, Mg(OH)₂, NiO, CaO, ZnO, Zn₂SnO₄, ZnSnO₃, ZnSn(OH)₆, ZrO₂, Y₂O₃, SiO₂, Al₂O₃, AlOOH, Al(OH)₃, SiC, TiO₂, H₃BO₃, HBO₂, and mixtures thereof.

The average particle diameter (D50) of the inorganic particles may be about 50 nm or more and 5,000 nm or less. For example, the average particle diameter (D50) of the inorganic particles may be about 100 nm or more and 4,500 nm or less, 200 nm or more and 4,000 nm or less, 300 nm or more and 3,000 nm or less, 400 nm or more and 2,000 nm or less, or 500 nm or more and 1,000 nm or less. When the average particle diameter of the inorganic particles is less than about 50 nm, an additional polymer binder for bonding between the inorganic particles is required as the specific surface area increases, which is disadvantageous in terms of electrical resistance. When the average particle diameter of the inorganic particles exceeds 5,000 nm, the uniformity of the surface of the coating layer may decrease and damage to the porous polymer substrate or electrode may occur during lamination.

In addition, the aspect ratio of the inorganic particles may be about 1 or more and 2 or less. For example, the aspect ratio of the inorganic particles may be about 1.1 or more and 1.9 or less, 1.2 or more and 1.8 or less, 1.3 or more and 1.7 or less, or 1.4 or more and 1.6 or less. When the aspect ratio of the inorganic particles is adjusted within the above-mentioned range, it is possible to form a porous coating layer that facilitates the migration of the polymer binder through the pores between the inorganic particles, and ultimately includes an interstitial volume that allows for lithium ion migration.

The BET (Brunauer-Emmett-Teller) specific surface area of the inorganic particles may be about 5 m²/g or more and 25 m²/g or less. For example, the BET specific surface area of the inorganic particles may be about 6 m²/g or more and 24 m²/g or less, 7 m²/g or more and 23 m²/g or less, 8 m²/g or more and 22 m²/g or less, 9 m²/g or more and 21 m²/g or less, 10 m²/g or more and 20 m²/g or less, 11 m²/g or more and 19 m²/g or less, 12 m²/g or more and 18 m²/g or less, 13 m²/g or more and 17 m²/g or less, or 14 m²/g or more and 26 m²/g or less. When the BET specific surface area of the inorganic particles is adjusted within the above-mentioned range, the migration of the polymer binder through the pores between the inorganic particles may be controlled.

The porous coating layer may include about 90% by weight to 95% by weight of the inorganic particles based on the total weight of the porous coating layer. For example, the porous coating layer may include about 90% by weight or more and 95% by weight or less, 91% by weight or more and 92% by weight or less, or 93% by weight or more and 94% by weight or less of the inorganic particles. Alternatively, the porous coating layer may include about 92% by weight or more and 94% by weight or less of the inorganic particles. When the content of the inorganic particles is adjusted within the above-mentioned range, a separator having mechanical strength and thermal properties suitable for cylindrical batteries may be manufactured.

In the separator, the loading amount of the porous coating layer relative to the area of the porous polymer substrate may be about 1.0 g/m² or more and 6.0 g/m² or less. For example, the loading amount of the porous coating layer may be about 1.5 g/m² or more and 5.5 g/m² or less, 2.0 g/m² or more and 5.0 g/m² or less, 2.5 g/m² or more and 4.5 g/m² or less, or 3.0 g/m² or more and 4.0 g/m² or less. According to an embodiment, the loading amount of the porous coating layer may be about 5.5 g/m² or more and 6.0 g/m² or less. When the loading amount of the porous coating layer is adjusted within the above-mentioned range, the durability of the separator against the electrolyte may be secured.

The separator for the electrochemical device may have an air permeability of about 50 s/100 cc or more and 150 s/100 cc or less. For example, the separator may have an air permeability of about 60 s/ 100 cc or more and 140 s/100 cc or less, 70 s/100 cc or more and 130 s/100 cc or less, 80 s/100 cc or more and 120 s/100 cc or less, or 90 s/100 cc or more and 110 s/100 cc or less. According to an embodiment, the air permeability of the separator may be 100 s/100 cc or more and 120 s/100 cc or less. When the air permeability of the separator is within the above-mentioned range, the output, stability, and cycle characteristics of the electrochemical device may be secured.

Meanwhile, the heat shrinkage rate of the separator for the electrochemical device may be about 10% or less. For example, the dry state heat shrinkage rate of the separator may be about 5% or less, and the wet state heat shrinkage rate may be about 10% or less. According to an embodiment, the dry state heat shrinkage rate of the separator may be a dimensional change rate based on exposure to 200 °C for 30 minutes, and the wet state heat shrinkage rate may be a dimensional change rate based on exposure to 135 °C for 30 minutes while the separator is impregnated in an electrolyte. According to an embodiment, the dry state heat shrinkage rate may be about 5% or less, and the wet state heat shrinkage rate may be about 5% or less.

When a secondary battery cell is manufactured using the separator for the electrochemical device, the secondary battery cell may have an electrical resistance of about 0.5 Ohm or more and 1.5 Ohm or less. For example, the electrical resistance of the secondary battery cell may be about 0.6 Ohm or more and 1.4 Ohm or less, 0.7 Ohm or more and 1.3 Ohm or less, 0.8 Ohm or more and 1.2 Ohm or less, or 0.9 Ohm or more and 1.1 Ohm or less. According to an embodiment, the electrical resistance of the secondary battery cell may be about 0.6 Ohm or more and 0.8 Ohm or less.

According to another embodiment of the present disclosure, an electrochemical device includes a positive electrode, a negative electrode, and a separator interposed between the positive electrode and the negative electrode, in which the separator is the separator for the electrochemical device of the above-described embodiment. The electrochemical device may be manufactured by inserting an electrode assembly including a positive electrode, a negative electrode, and a separator interposed between the positive electrode and the negative electrode into a case or pouch, and sealing the case or pouch. Before sealing the case or pouch, the electrode assembly may be impregnated with the electrolyte by injecting the electrolyte. The shape of the case or pouch is not limited. For example, the electrochemical device may be a cylindrical, prismatic, coin-shaped, or pouch-shaped lithium secondary battery.

The positive electrode and the negative electrode may be coated by applying and drying an electrode active material on at least one surface of each collector. The collector may be a material that has conductivity without causing chemical changes in the electrochemical device. Examples of the collector for the positive electrode include aluminum, nickel, titanium, fired carbon, and stainless steel; and aluminum or stainless steel which is subjected to surface treatment with carbon, nickel, titanium, or silver, but not limited thereto. Examples of the collector for the negative electrode include copper, nickel, titanium, fired carbon, and stainless steel; and copper or stainless steel which is subjected to surface treatment with carbon, nickel, titanium, or silver, but not limited thereto. The collector may be in various forms, such as a thin metal plate, film, foil, net, porous material, or foam.

The positive electrode includes a positive electrode collector and a positive electrode active material layer containing a positive electrode active material, a conductive material, and a binder resin on at least one surface of the collector. The positive electrode active material includes layered compounds such as lithium manganese composite oxide (e.g., LiMn₂O₄ and LiMnO₂), lithium cobalt oxide (LiCoO₂), and lithium nickel oxide (LiNiO₂), or a compound substituted with one or more transition metal elements; lithium manganese oxides represented by the formulas Li₁₊ₓMn₂₋ₓO₄ (where x is 0 to 0.33), LiMnO₃, LiMn₂O₃, or LiMnO₂; lithium copper oxide (Li₂CuO₂); vanadium oxides such as LiV₃O₈, LiV₃O₄, V₂O₅, Cu₂V₂O₇; Ni-site type lithium nickel oxides represented by the formula LiNi₁₋ₓMₓO₂ (where M = Co, Mn, Al, Cu, Fe, Mg, B, or Ga, and x = 0.01 to 0.3); lithium manganese complex oxides represented by the formula LiMn₁₋ₓMₓO₂ (where M = Co, Ni, Fe, Cr, Zn, or Ta, and x = 0.01 to 0.1) or Li₂Mn₃MO₈ (where M = Fe, Co, Ni, Cu, or Zn); LiMn₂O₄ in which some of Li in the formula is replaced with an alkaline earth metal ion; disulfide compounds; Fe₂(MoO₄)₃, which may be used alone or in mixture of two or more thereof.

The negative electrode includes a negative electrode collector and a negative electrode active material layer containing a negative electrode active material, a conductive material, and a binder resin on at least one surface of the collector. The negative electrode active material in the negative electrode includes carbon such as lithium metal oxide, hard carbon, and graphitic carbon; silicon-based materials such as LixFe₂O₃ (0≤x≤1), LiₓWO₂ (0≤x≤1), Si, SiOₓ (0<x<2), SiC, and Si alloy; metal complex oxides such as SnₓMe₁₋ₓMe'_{y}O_{z} (Me: Mn, Fe, Pb, Ge; Me': Al, B, P, Si, elements of groups 1, 2, and 3 of the periodic table, halogen; 0<x≤1; 1≤y ≤3; 1≤z≤8); lithium metal; lithium alloy; tin-based alloy; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni-based materials; and titanium oxide, which may be used alone or in mixture of two or more thereof.

The conductive material may be any one or a mixture of two or more conductive materials selected from the group consisting of graphite, carbon black, carbon fiber or metal fiber, metal powder, conductive whisker, conductive metal oxide, carbon nanotube, activated carbon, and polyphenylene derivative. The carbon nanotube has a graphite sheet in a shape of a cylinder having a nano-sized diameter and an sp² bond structure, and exhibits conductor or semiconductor characteristics according to the angle and structure at which the graphite sheet is rolled. The carbon nanotube may be categorized as a single-walled carbon nanotube (SWCNT), a double-walled carbon nanotube (DWCNT), and a multi-walled carbon nanotube (MWCNT) based on the number of bonds that make up their walls, and the carbon nanotube may be appropriately selected based on the application of the dispersion. For example, the conductive material may be one selected from the group consisting of natural graphite, artificial graphite, super-p, acetylene black, Ketjen black, channel black, furnace black, lamp black, thermal black, Denka black, aluminum powder, nickel powder, zinc oxide, potassium titanate, and titanium oxide, or a mixture of two or more thereof.

The binder resin that may be used herein may be any binder resin commonly used for electrodes of electrochemical devices. Non-limiting examples of the binder resin include polyvinylidene fluoride-co-hexafluoropropylene, polyvinylidene fluoride-co-trichloroethylene, poly(methyl methacrylate), poly(ethylhexyl acrylate), poly(butyl acrylate), polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, and carboxyl methyl cellulose, but is not limited thereto.

The electrolyte may be obtained by dissolving or dissociating a salt with a structure such as A⁺B⁻, in which A⁺ includes an alkali metal cation such as Li⁺, Na⁺, or K⁺, or a combination thereof, and B⁻ includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, or C(CF₂SO₂)₃⁻, or a combination thereof, in an organic solvent such as propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), γ-butyrolactone, or a mixture thereof.

For example, the electrolyte may contain a solvent having a weight ratio of EC/EMC of about 3/7, and the dimensional stability of the separator according to the embodiment may be maximized.

The electrochemical device including the electrode assembly may be a lithium secondary battery. The battery may be used as a unit cell, and may be used as a battery module including the unit cell, a battery pack including the battery module, and a device including the battery pack as a power source. Examples of the device include small devices such as computers, mobile phones, and power tools; electric cars, including electric vehicles (EVs), hybrid electric vehicles (HEVs), and plug-in hybrid electric vehicles (PHEVs) powered by electric motors; electric two-wheeled vehicles, including electric bicycles (E-bikes) and electric scooters (E-scooters); electric golf carts; and medium to large devices such as power storage systems, but not limited thereto.

Another embodiment of the present disclosure provides a method for preparing a separator for an electrochemical device, including forming a porous coating layer containing an acrylic polymer binder, a copolymer binder, and inorganic particles on at least one surface of a porous polymer substrate. Contents that overlap with the contents described in the separator for the electrochemical device is replaced with the explanation of the preceding embodiment.

The step of forming the porous coating layer may include preparing a coating slurry containing an acrylic polymer binder, a copolymer binder, inorganic particles, and a dispersion medium, and applying the coating slurry to the porous polymer substrate, followed by drying.

The step of forming the porous coating layer may further include performing a corona discharge treatment on at least one surface of the porous polymer substrate before applying the coating slurry to at least one surface of the porous polymer substrate. The step of performing the corona discharge treatment on at least one surface of the porous polymer substrate may prevent a decrease in the binding force between the surface of the porous polymer substrate and the surface of the coating layer at a high temperature higher than a predetermined temperature, and prevent the binding force between the surface of the porous polymer substrate and the surface of the porous coating layer from being lowered by the electrolyte.

The corona discharge treatment may be performed on at least one surface of the porous polymer substrate at a voltage of about 0.1 kV or more and 10 kV or less in air. For example, the corona discharge treatment may be performed at a voltage of about 0.2 kV or more and 9 kV or less, 0.3 kV or more and 8 kV or less, 0.4 kV or more and 7 kV or less, 0.5 kV or more and 6 kV or less, 0.6 kV or more and 5 kV or less, 0.7 kV or more and 4 kV or less, 0.8 kV or more and 3 kV or less, 0.9 kV or more and 2 kV or less, or 1.0 kV or more and 2 kV or less. According to an embodiment, the corona discharge treatment may be performed at a voltage of about 1.8 kV in air. When the applied voltage of the corona discharge treatment is adjusted within the above-mentioned range, an appropriate number of functional groups may be formed on the surface of the polymer substrate, and damage to the surface of the polymer substrate may be prevented.

The step of forming the porous coating layer may include applying the coating slurry to the porous polymer substrate to form a coating. For example, the coating may be formed by, but not limited to, a bar coater, a wire bar coater, a roll coater, a spray coater, a spin coater, an inkjet coater, a screen coater, a reverse coater, a gravure coater, a knife coater, a slot die coater, a hot melt coater, a comma coater, and a direct metering coater. According to an embodiment, the step of forming the porous coating layer may include simultaneously coating both surfaces of the porous polymer substrate with the coating slurry using a bar coater or a slot die coater.

The step of forming the porous coating layer may include applying the coating slurry to the porous polymer substrate, followed by drying or heating the porous coating layer to evaporate the dispersion medium contained in the porous coating layer. The removal of the dispersion medium may be performed at a temperature capable of evaporating only the dispersion medium contained in the porous coating layer without modifying the polymer binder contained in the porous coating layer. For example, the removal of the dispersion medium may be implemented by heating the porous coating layer to a predetermined temperature, but ensuring that the temperature of the surface of the porous coating layer does not exceed 60 °C. When heating the porous coating layer under the above conditions, the thermal energy may be used first to heat the dispersion medium and change the phase, and may not be used to modify the polymer binder.

Hereinafter, the present disclosure will be described in more detail with reference to examples and experimental examples. The following examples and experimental examples are only illustrative of the present disclosure, and the present disclosure is not limited to the following examples and experimental examples.

### Example 1

### Preparation of Coating Slurry

Into 53.7 mL of distilled water at room temperature (25 °C), 2.77g (solid content 11.4%) of copolymer (weight average molecular weight: 70,000, pH 7.2, viscosity 55 cps@RT), which was obtained by polymerizing polyacrylic acid and polyacrylamide in a ratio of 5:5, as a copolymer binder, 30 g of Al₂O₃ (particle size (D50): 500 nm) as inorganic particles, and 3.1 g (solid content 25%) of PAA-based polymer dispersant as an additive were introduced and stirred with a shaker for 120 minutes, and then 2.42 g (solid content 40%) of an acrylic polymer binder (particle diameter (D50): 150 nm, Tg: -25 °C) and 0.19 g (solid content 100%) of a wetting agent as an additive were added thereto to prepare a coating slurry in which the copolymer binder and the inorganic particles were dispersed.

### Preparation of Porous Polymer Substrate

As a porous polymer substrate, a polyethylene film (MI: 0.2 g/10 min, Tₘ: 135 °C, porosity: 45%, average pore size: 35 nm) with a size of 20 cm × 30 cm and a thickness of 10 µm was used.

### Preparation of Separator

The coating slurry was coated on both surfaces of the polyethylene film using a bar coater to form a coating layer having a thickness of 1.5 µm.

The process of applying a low-temperature air volume to the polyethylene film on which the coating layer was formed and removing the dispersion medium was repeated five times to prepare a separator having a total thickness of 13 µm and including the acrylic polymer binder, copolymer binder, additives, and inorganic particles contained in the porous coating layer in a weight ratio of 3:1:3:93.

Although the order of the manufacturing method of the separator of the present disclosure has been described, the order of the manufacturing method is not limited thereto and may be suitably modified and adjusted as needed. For example, the preparation of the porous substrate may be performed prior to the preparation of the coating slurry, or both preparations may be performed simultaneously.

### Example 2

A separator was prepared in the same manner as in Example 1, except that the copolymer binder having a weight average molecular weight of 67,000 was used in the preparation of the coating slurry.

### Example 3

A separator (weight ratio of acrylic polymer binder, copolymer binder, additives, and inorganic particles included in the porous coating layer was 3:2:3:92) was prepared in the same manner as in Example 1, except that 2.45 g of acrylic polymer binder, 5.6 g of copolymer binder, 30 g of inorganic particles, 3.13 g of dispersant, and 0.2 g of wetting agent were included in the preparation of the coating slurry.

### Example 4

A separator was prepared in the same manner as in Example 1, except that a copolymer binder obtained by copolymerizing polyacrylic acid and polyacrylamide in a ratio of 7:3 was used in the preparation of the coating slurry.

### Comparative Example 1

A separator was prepared in the same manner as in Example 1, except that the copolymer binder having a weight average molecular weight of 35,000 was used in the preparation of the coating slurry.

### Comparative Example 2

A separator was prepared in the same manner as in Example 1, except that the copolymer binder having a weight average molecular weight of 100,000 was used in the preparation of the coating slurry.

### Comparative Example 3

A separator was prepared in the same manner as in Example 1, except that the copolymer binder having a weight average molecular weight of 160,000 was used in the preparation of the coating slurry.

### Comparative Example 4

A separator (weight ratio of acrylic polymer binder, copolymer binder, additives, and inorganic particles included in the porous coating layer was 3:0:3:94) was prepared in the same manner as in Example 1, except that 2.39 g of acrylic polymer binder and 30 g of inorganic particles were included, but no copolymer binder was used in the preparation of the coating slurry.

### Comparative Example 5

A separator (weight ratio of acrylic polymer binder, copolymer binder, additives, and inorganic particles was 3:5:3:89) was prepared in the same manner as in Example 1, except that 2.53 g of acrylic polymer binder, 14.48 g of copolymer binder, and 30 g of inorganic particles were included in the preparation of the coating slurry.

### Comparative Example 6

A separator (weight ratio of acrylic polymer binder, copolymer binder, additives, and inorganic particles was 3:10:3:84) was prepared in the same manner as in Example 1, except that 2.68 g of acrylic polymer binder, 30.68 g of copolymer binder, and 30 g of inorganic particles were included in the preparation of the coating slurry.

### Comparative Example 7

A separator was prepared in the same manner as in Example 1, except that only polyacrylic acid was used instead of the copolymer binder in the preparation of the coating slurry.

### Comparative Example 8

A separator was prepared in the same manner as in Example 1, except that a copolymer binder obtained by copolymerizing polyacrylic acid and polyacrylamide in a ratio of 3:7 was used in the preparation of the coating slurry.

### Comparative Example 9

A separator was prepared in the same manner as in Example 1, except that only polyacrylamide was used instead of the copolymer binder in the preparation of the coating slurry.

### Experimental Example 1. Determination of properties of the separator according to the properties of the coating slurry

The conditions of the separators prepared according to Example 1 and Comparative Examples 1 to 3 were confirmed, and the properties of the separators according to the molecular weight as the properties of the copolymer binder used were determined and shown in Table 1 below.

In Comparative Examples 2 and 3, the viscosity of the coating slurry exceeded 1,000 cps, and thus, coating using a bar coater could not be performed. Hereinafter, the properties of the separator prepared according to Example 1 and Comparative Example 1 were confirmed.

### Measurement of Air Permeability

The air permeability was measured using a Gurley densometer (Gurley, 4110N) to determine the time it takes for 100 cc of air to pass through a separator with a diameter of 28.6 mm and an area of 645 mm².

### Confirmation of improvement in dry state heat shrinkage rate

The separators of Examples and Comparative Examples were each prepared as specimens with a size of 5 cm× 5 cm. After the prepared specimens were stored in a convection oven at 200 °C for 30 minutes, heat shrinkage rates in the machine direction (MD) and transverse direction (TD) were calculated according to [(length of the initial specimen - length after storage at 200 °C for 0.5 h)/(length of the initial specimen)] × 100 (%), respectively.

### Confirmation of improvement in wet state heat shrinkage rate

The separators of Examples and Comparative Examples were prepared as specimens with a size of 5 cm × 5 cm and inserted into aluminum pouches with a size of 7 cm × 10 cm in size. The pouch was filled with 1 g of an electrolyte, and the pouch was sealed.

The electrolyte contained 3 mol of vinylene carbonate (VC), 1.5 mol of propane sultone (PS), 1 mol of ethylene sulfate (ESa), and 1 mol of lithium salt LiPF₆ as additives in a solvent mixed with ethylene carbonate (EC) and ethyl methyl carbonate (EMC) in a weight ratio of 3/7.

After the sealed pouch was stored in a hot box at 135 °C for 30 minutes, heat shrinkage rates in the machine direction (MD) and transverse direction (TD) were calculated according to [(length of the initial specimen - length after storage at 135 °C for 0.5 h)/(length of the initial specimen)] × 100 (%), respectively.

### Confirmation of EL wettability for electrolyte

The separators of Examples and Comparative Examples were prepared as specimens of 5 cm × 5 cm, and 2 µl of propylene carbonate (PC) as the electrolyte was dropped on the surface of the separator. After 5 minutes, the lengths spread in the MD direction and TD direction were measured, respectively, based on the droplet boundary immediately after the electrolyte was dropped on the surface of the separator.

**Table 1**

| | Example 1 | Comparative Example 1 | Comparative Example 2 | Comparative Example 3 |
|---|---|---|---|---|
| Molecular weight of copolymer binder | 70,000 | 35,000 | 100,000 | 160,000 |
| Thickness of separator (µm) | 13.1 | 13.0 | Coating was not possible due to increased viscosity of the coating slurry (>1,000 cps) | |
| Loading amount of porous coating layer (g/m²) | 6.0 | 5.8 | | |
| Air Permeability (s/100 cc) | 121 | 114 | | |
| Dry state heat shrinkage rate at 200 °C for 0.5 h (MD (%)/TD (%)) | 2/2 | 7/6 | | |
| Wet state heat shrinkage rate at 135 °C for 0.5 h (MD (%)/TD (%)) | 4/4 | 6/4 | | |
| EL wettability (MD (mm)/TD (mm)) | 3.2/3.8 | 3.2/3.6 | | |

### Experimental Example 2. Determination of properties of the separator according to the content of the copolymer binder

The conditions of the separators prepared according to Examples 2 and 3 and Comparative Examples 4 to 6 were confirmed, and the properties of the separators according to the content of the copolymer binder used were determined and shown in Table 2 below.

In Comparative Examples 5 and 6, the viscosity of the coating slurry exceeded 1,000 cps, and thus, coating using a bar coater could not be performed. Hereinafter, the properties of the separators prepared according to Examples 2 and 3 and Comparative Example 4 were confirmed. The method for confirming each property is the same as the previous experimental example.

**Table 2**

| | Example 2 | Example 3 | Comparative Example 4 | Comparative Example 5 | Comparative Example 6 |
|---|---|---|---|---|---|
| Weight ratio of copolymer binder and inorganic particles | 1:93 | 2:92 | 0:94 | 5:89 | 10:84 |
| Thickness of separator (µm) | 13.0 | 13.0 | 12.9 | Coating was not possible due to increased viscosity of the coating slurry (>1,000 cps) | |
| Loading amount of porous coating layer (g/m²) | 6.1 | 6.1 | 5.8 | | |
| Air Permeability (s/100 cc) | 123 | 119 | 115 | | |
| Dry state heat shrinkage rate at 200 °C for 0.5 h (MD (%)/TD (%)) | 2/1 | 2/2 | 8/6 | | |
| Wet state heat shrinkage rate at 135 °C for 0.5 h (MD (%)/TD (%)) | 4/5 | 4/4 | 25/18 | | |
| EL wettability (MD (mm)/TD (mm)) | 3.2/3.8 | 3.3/3.6 | 3.4/3.6 | | |

### Experimental Example 3. Determination of properties of the separator according to the copolymerization ratio of the copolymer binder

The conditions of the separators prepared according to Examples 1 and 4 and Comparative Examples 7 to 9 were confirmed, and the properties of the separators according to the copolymerization ratio of the copolymer binder used were determined and shown in Table 3 below. The method for confirming each property is the same as the previous experimental example.

**Table 3**

| | Example 1 | Example 4 | Comparative Example 7 | Comparative Example 8 | Comparative Example 9 |
|---|---|---|---|---|---|
| Copolymerization ratio of copolymer binder (PAA:PAM) | 5:5 | 7:3 | 10:0 | 3:7 | 0:10 |
| Thickness of separator (µm) | 13.0 | 13.1 | 13.2 | 13.1 | 13.1 |
| Loading amount of porous coating layer (g/m²) | 6.0 | 6.0 | 6.3 | 6.3 | 6.2 |
| Air Permeability (s/100 cc) | 121 | 126 | 119 | 123 | 129 |
| Dry state heat shrinkage rate at 200 °C for 0.5 h (MD (%)/TD (%)) | 2/2 | 2/2 | 2/2 | 9/19 | 44/53 |
| Wet state heat shrinkage rate at 135 °C for 0.5 h (MD (%)/TD (%)) | 4/4 | 5/3 | 20/15 | 5/3 | 6/5 |
| EL wettability (MD (mm)/TD (mm)) | 3.2/3.8 | 3.2/3.7 | 3.5/3.9 | 2.6/3.0 | 2.2/2.5 |

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

## Claims

1. A separator for an electrochemical device, comprising:
a porous polymer substrate; and
a porous coating layer formed on at least one surface of the porous polymer substrate,
wherein the porous coating layer includes an acrylic polymer binder, a copolymer binder, and inorganic particles,
the copolymer binder has a weight average molecular weight of 40,000 to 80,000, and
the copolymer binder and the inorganic particles are included in a weight ratio of 1:93 to 1:20.

2. The separator according to claim 1, wherein the acrylic polymer binder includes, a repeating unit including one or more monomers selected from the group consisting of (meth)acrylic acid, (meth)acrylate, propyl acrylate, isopropyl acrylate, n-butyl acrylate, isobutyl acrylate, n-amyl acrylate, isoamyl acrylate, n-ethylhexyl acrylate, 2-ethylhexyl acrylate, 2-hydroxyethyl acrylate, methyl methacrylate, ethyl methacrylate, propyl methacrylate, isopropyl methacrylate, n-butyl methacrylate, isobutyl methacrylate, n-amyl methacrylate, isoamyl methacrylate, n-hexyl methacrylate, n-ethylhexyl methacrylate, 2-ethylhexyl methacrylate, hydroxyethyl methacrylate, (meth)acrylonitrile butyl (meth)acrylate, 2-ethylhexyl (meth)acrylate, ethyl (meth)acrylate, methyl (meth)acrylate, n-propyl (meth)acrylate, isopropyl (meth)acrylate, t-butyl (meth)acrylate, pentyl (meth)acrylate, n-oxyl (meth)acrylate, isooctyl (meth)acrylate, isononyl (meth)acrylate, lauryl (meth)acrylate, and tetradecyl (meth)acrylate.

3. The separator according to claim 1, wherein the copolymer binder is obtained by copolymerizing two or more selected from the group consisting of polyacrylic acid, polyacrylamide, and polyvinyl alcohol.

4. The separator according to claim 3, wherein the copolymer binder is obtained by copolymerizing polyacrylic acid and polyacrylamide in a ratio of 8:2 to 5:5.

5. The separator according to claim 1, wherein the acrylic polymer binder is in a form of particles having an average particle diameter (D50) of 100 nm to 500 nm, and
the copolymer binder is non-particle-shaped.

6. The separator according to claim 1, wherein the porous coating layer includes 90% by weight to 95% by weight of the inorganic particles based on a total weight of the porous coating layer.

7. The separator according to claim 1, wherein a content of the acrylic polymer binder is greater than a content of the copolymer binder on a weight basis of the porous coating layer.

8. The separator according to claim 7, wherein the acrylic polymer binder and the copolymer binder are included in a weight ratio of 5:1 to 1.5:1.

9. An electrochemical device comprising:
a positive electrode;
a negative electrode; and
a separator disposed between the positive electrode and the negative electrode, wherein the separator is the separator for an electrochemical device of claim 1.

10. The electrochemical device according to claim 9, further comprising:
electrolyte containing a solvent in which ethylene carbonate (EC) and ethyl methyl carbonate (EMC) are mixed in a weight ratio of 3:7.
